# FASCICULE DE BREVET EUROPEEN

(11) **EP 1 900 212 B1**
(45) Date de publication et mention de la délivrance du brevet: **23.09.2009**
(21) Numéro de dépôt: 06777631.0
(22) Date de dépôt: 06.07.2006
(51) Int. Cl.: H04N 7/167, G11B 20/00

(54) **METHODE DE CONTROLE D'ACCES A DES DONNEES CHIFFREES**
VERFAHREN ZUR KONTROLLE DES ZUGANGS ZU VERSCHLÜSSELTEN DATEN
METHOD FOR CONTROLLING ACCESS TO ENCRYPTED DATA

(30) Priorité: 07.07.2005 EP 05106186
(43) Date de publication de la demande: 19.03.2008
(73) Titulaire: Nagravision SA, 1033 Cheseaux-sur-Lausanne (CH)
(72) Inventeur: STRANSKY, Philippe, CH-1033 Cheseaux-sur-Lausanne (CH)
(74) Mandataire: Leman Consulting S.A.
(86) Numéro de dépôt international: PCT/EP2006/063989
(87) Numéro de publication internationale: WO 2007/006736

(56) Documents cités:
- EP-A- 1 447 983
- WO-A-01/15448
- WO-A-20/04071091
- FR-A- 2 631 193
- US-A- 5 349 641

## Description

### DOMAINE TECHNIQUE

La présente invention concerne une méthode de contrôle d'accès à des données chiffrées par des mots de contrôle CW, ces mots de contrôle étant reçus par un module de sécurité dans des messages de contrôle et retournés à une unité d'exploitation des données chiffrées.

La présente méthode s'applique en particulier dans le cas de la télévision à péage.

### TECHNIQUE ANTERIEURE

De façon bien connue, en particulier dans le domaine mentionné ci-dessus de la télévision à péage, des données sont chiffrées par un fournisseur de données au moyen de clés de chiffrement nommées mots de contrôle. Ces données sont transmises à des unités multimédia d'utilisateurs ou d'abonnés. Parallèlement à ceci, les mots de contrôle sont transmis à ces unités multimédia sous la forme d'un flux de messages de contrôle.

Les unités multimédia sont généralement formées d'une unité d'exploitation qui, dans le cas de la télévision à péage, est un décodeur recevant les flux mentionnés ci-dessus, et d'un module de sécurité en charge des opérations cryptographiques liées à l'utilisation de ces flux.

De façon bien connue de l'homme du métier, un tel module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Lorsqu'une unité multimédia a reçu le flux contenant les mots de contrôle, il est tout d'abord vérifié si l'utilisateur dispose des droits pour déchiffrer des données spécifiques. Si tel est le cas, les messages de contrôle sont déchiffrés de façon à en extraire les mots de contrôle. Ces mots de contrôle sont à leur tour utilisés pour déchiffrer les données.

Egalement de façon connue, chaque mot de contrôle permet généralement de déchiffrer une faible partie des données transmises. Typiquement, un mot de contrôle permet de déchiffrer 10 secondes d'un événement de télévision à péage. Après cette durée, appelée cryptopériode, le mot de contrôle est changé pour des raisons de sécurité.

Une manière possible de bénéficier de l'accès à des données chiffrées sans en être autorisé consiste à utiliser une véritable unité multimédia avec un vrai module de sécurité, et de distribuer les mots de contrôle à un ensemble de décodeurs. Ceci peut se faire au moyen d'un serveur ou dispositif séparateur connu sous l'appellation "splitter". Ainsi, les montants liés à l'acquisition de droits d'accès à des données chiffrées sont payés pour une seule unité multimédia alors que des événements peuvent être accessibles depuis plusieurs unités multimédia.

L'invention décrite dans la demande de brevet US 2004/0215691 cherche à empêcher cet usage frauduleux. Pour réaliser ceci, chaque fois qu'un message de contrôle est reçu par une unité multimédia, cette unité ou le module de sécurité qui lui est associé détermine à quel canal est lié ce message de contrôle. Les identifiants des canaux sont mémorisés avec une information temporelle. Les messages sont comparés de façon à déterminer s'ils sont liés à des canaux différents ou au même canal. S'ils sont liés à des canaux différents, un compteur est incrémenté d'une certaine valeur. Si les messages de contrôle sont liés au même canal, le compteur est décrémenté. Si le compteur atteint une valeur de seuil prédéfinie, ce qui signifie que de nombreux changements de canaux sont intervenus, le déchiffrement des mots de contrôle est stoppé.

Ce procédé implique qu'il est nécessaire d'avoir à disposition, un identifiant du canal concerné par chaque message de contrôle. Dans certaines configurations, ceci n'est pas le cas. En utilisant des messages de contrôle tels que définis en particulier dans la norme Eurocrypt N° EN 50094 de décembre 1992, il est possible d'identifier non pas chaque canal, mais une classe de canaux. Dans ce cas, il n'est pas possible, avec l'invention décrite ci-dessus, de bloquer l'utilisation de plusieurs unités multimédia qui utilisent un seul module de sécurité et un dispositif séparateur.

La demande internationale publiée sous le numéro WO 01/15448 décrit un système de télévision à péage et plus précisément, un système de vidéo à la demande. Dans ce système, les données sont chiffrées au moyen de mots de contrôle. Ces mots de contrôle sont envoyés aux utilisateurs uniquement pendant un temps prédéfini pendant lequel l'utilisateur doit les acquérir s'il veut pouvoir accéder au contenu. Ce procédé limite le risque qu'un utilisateur frauduleux ne réceptionne de manière illégale les mots de contrôle et accède ainsi au contenu.

Ce procédé n'est toutefois pas applicable dans un système conventionnel de télévision à péage dans lequel un utilisateur peut changer de canal. En effet, dans le cas d'un changement de canal, cet utilisateur serait obligé d'attendre la réception d'un message de contrôle correspondant au nouveau canal avant de pouvoir accéder au contenu.

La publication WO 2004/071091 décrit une invention dont le but est de maximiser la vitesse de défilement autorisée en mode "avance rapide" ou "recul rapide". Ce but est donc totalement différent du but de l'invention objet de la présente demande. Dans cette publication WO 2004/071091, l'optimisation de la vitesse de défilement est obtenue en décalant le changement de mot de contrôle par rapport au flux de données d'une valeur correspondant environ à la moitié d'une cryptopériode. Cette valeur de la moitié de la cryptopériode est la valeur idéale permettant d'atteindre le but de l'invention, puisqu'elle permet d'optimiser la vitesse aussi bien lors du défilement vers l'avant que du défilement vers l'arrière. Plus on s'éloigne de cette valeur, moins l'avantage de décaler le flux de données avec le changement de mot de contrôle est utile.

De façon bien connue, les messages de contrôle sont répétés selon des intervalles de temps très courts, par exemple toutes les 50 ms. Ceci a pour objectif que lors d'un changement de canal (zapping), le mot de contrôle nécessaire à l'accès au contenu est rapidement disponible. Lorsqu'une unité multimédia a reçu un message de contrôle, elle filtre les messages identiques de sorte que ceux-ci ne sont transmis qu'une seule fois au module de sécurité. Dans la suite de la description, il est sous-entendu que lorsque l'on mentionne des messages de contrôle ECM, il s'agit de messages différents, puisque les messages identiques ne sont pas utilisés.

Une difficulté se présente dans le cas où les messages de contrôle contiennent plus d'un mot de contrôle. En pratique, il est courant d'envoyer deux mots de contrôle par message de contrôle. Ceci a pour avantage que, pendant que l'un des mots de contrôle est utilisé, l'autre est déchiffré et mémorisé. Cette réalisation permet de prévoir des algorithmes de déchiffrement plus sûrs, donc plus long à déchiffrer.

Dans un tel cas, il est possible pour un utilisateur frauduleux, de n'utiliser qu'un message de contrôle sur deux, puis de transmettre le message non-utilisé à un autre décodeur ou dispositif d'exploitation. De cette manière, chaque décodeur reçoit l'intégralité des mots de contrôle qui lui sont nécessaires. Ainsi, plusieurs unités d'exploitations peuvent permettre l'accès au contenu chiffré alors qu'un seul abonné en a en principe les droits.

Ce type de fraude est particulièrement difficile à détecter puisqu'il n'est pas possible, sans utiliser d'identifiant de canal, de distinguer un usage normal de tous les messages de contrôle par un seul décodeur et un usage frauduleux par deux décodeurs distincts, d'un message de contrôle sur deux.

### EXPOSE DE L'INVENTION

La présente invention se propose de résoudre ce problème et d'empêcher ainsi l'accès à un contenu chiffré lors d'un usage frauduleux de deux décodeurs avec un seul module de sécurité.

La solution de l'invention permet en outre d'empêcher au moins partiellement l'accès au contenu chiffré, par les utilisateurs frauduleux qui n'utilisent qu'un message de contrôle sur deux et dont l'autre message de contrôle est transmis à un autre décodeur.

Le but de l'invention est atteint par une méthode de contrôle d'accès à des données chiffrées par des mots de contrôle, ces mots de contrôle étant reçus par un module de sécurité dans des messages de contrôle et retournés à une unité d'exploitation des données chiffrées, lesdits messages de contrôle contenant au moins un premier mot de contrôle et un second mot de contrôle, ces mots de contrôle permettant chacun l'accès aux données chiffrées pendant une durée déterminée dénommée cryptopériode, cette méthode comportant les étapes :
- d'envoi desdites données chiffrées à au moins une unité d'exploitation; et
- d'envoi des messages de contrôle (ECM) à ladite unité d'exploitation, un tel message de contrôle (ECM) contenant au moins deux mots de contrôle (CW1, CW2) déterminés étant envoyé à l'unité d'exploitation après l'envoi des données chiffrées par ledit premier mot de contrôle (CW1) et avant l'envoi des données chiffrées par ledit second mot de contrôle (CW2);
cette méthode étant caractérisée en ce que le temps de décalage entre l'envoi à l'unité d'exploitation des données chiffrées par ledit premier mot de contrôle (CW1) et l'envoi du message de contrôle (ECM) contenant ledit premier mot de contrôle (CW1) et ledit second mot de contrôle (CW2) est supérieur à 75% de la cryptopériode.

De façon générale, la méthode selon la présente invention utilise des messages de contrôle contenant deux mots de contrôle. Toutefois, l'utilisateur qui n'utilise qu'un message de contrôle sur deux ne sera pas en mesure d'accéder à la totalité du contenu chiffré. Deux utilisateurs partageant un dispositif séparateur et un même module de sécurité ne pourront accéder chacun qu'à une partie du contenu audio/vidéo.

### DESCRIPTION SOMMAIRE DES DESSINS

La présente invention et ses avantages seront mieux compris en référence aux figures annexées et à la description détaillée d'un mode de réalisation particulier donné à titre d'exemple non-limitatif, dans lesquelles :
- la figure 1 illustre un mode de réalisation selon l'art antérieur, dans lequel un flux de données et un flux de messages de contrôle sont utilisés de façon conventionnelle;
- la figure 2 illustre le mode de réalisation de la figure 1, dans lequel le flux de données et le flux de messages de contrôle sont utilisés de façon frauduleuse,
- la figure 3 illustre un mode de réalisation selon l'invention, dans lequel le flux de données et le flux de messages de contrôle sont utilisés de façon conventionnelle;
- la figure 4 illustre le mode de réalisation de la figure 3, dans lequel le flux de données et le flux de messages de contrôle sont utilisés de façon frauduleuse.

### MANIERES DE REALISER L'INVENTION

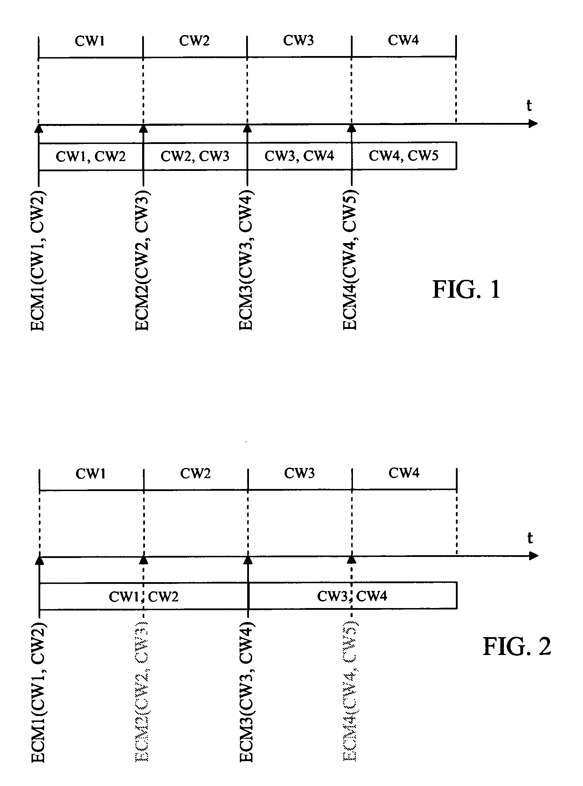

La figure 1 illustre schématiquement un flux de contenu audio/vidéo CT ainsi qu'un flux de messages de contrôle ECM contenant des mots de contrôle CW, en fonction du temps, selon l'art antérieur. Dans cette figure, le contenu audio/vidéo est chiffré avec des mots de contrôle référencés CW1, CW2,... ces mots de contrôle ayant une "durée de vie" dénommée cryptopériode, limitée, c'est-à-dire que chaque mot de contrôle permet d'accéder au contenu chiffré pendant une durée correspond à cette cryptopériode. Celle-ci peut par exemple être de 10 secondes. Dans l'exemple illustré, le premier message de contrôle ECM1 contient deux mots de contrôle CW1 et CW2. En même temps que la diffusion de ce premier message, le contenu CT est chiffré avec le premier mot de contrôle CW1. Dès que le premier message de contrôle ECM1 est déchiffré et que le mot de contrôle CW1 est renvoyé du module de sécurité au décodeur, le contenu peut être déchiffré et utilisé. Pendant ce temps, le deuxième mot de contrôle CW2 est mémorisé. II pourra être utilisé dès que nécessaire, c'est-à-dire lorsque les données à déchiffrer seront celles qui ont été chiffrées par ce mot de contrôle CW2.

La figure 2 illustre un usage frauduleux du procédé représenté par la figure 1. Dans cette utilisation, le premier utilisateur reçoit le premier message de contrôle ECM1 et en extrait les mots de contrôle CW1 et CW2. Avant de recevoir le deuxième message de contrôle ECM2, celui-ci est filtré de façon à ne pas être utilisé. Lorsque le contenu doit être déchiffré avec le mot de contrôle CW2, celui-ci est disponible puisqu'il a été envoyé dans le premier message de contrôle ECM1.

Le message de contrôle ECM2 peut être utilisé pour alimenter un deuxième décodeur. Afin de détecter un usage frauduleux, il est possible d'effectuer un décompte du nombre de messages de contrôle ECM déchiffrés lors de chaque cryptopériode. Ceci permet d'agir lorsqu'un nombre trop important de messages de contrôle est déchiffré pendant chaque cryptopériode. Dans le cas de l'invention toutefois, un test sur le nombre de messages de contrôle par cryptopériode ne permettra pas de repérer et d'empêcher un usage frauduleux, puisque ce nombre correspond exactement au nombre de messages déchiffré par un seul module de sécurité en usage normal.

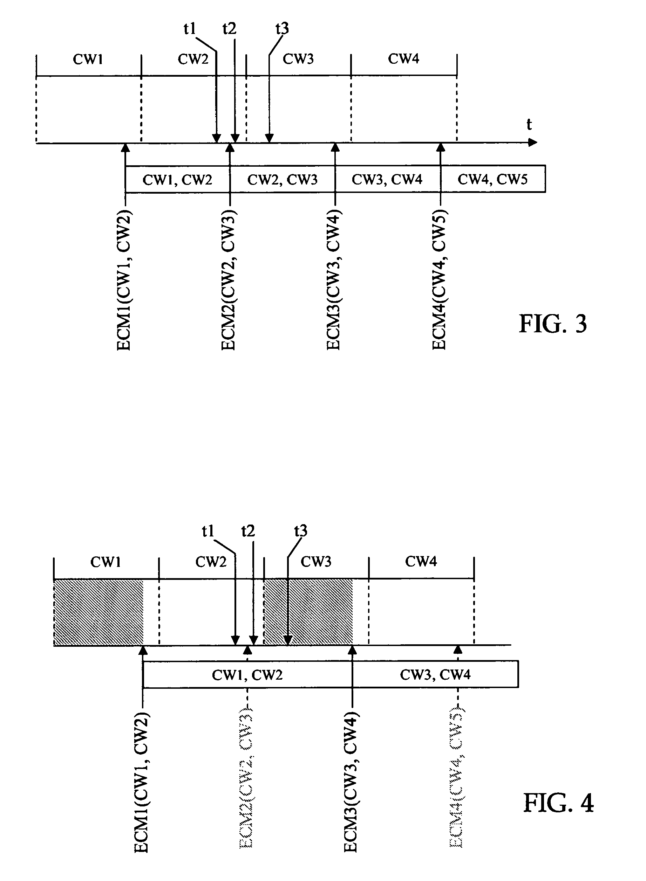

La figure 3 représente schématiquement la méthode de l'invention. Dans cette méthode, le flux de données chiffrées CT est décalé par rapport au flux de messages de contrôle ECM. La description ci-dessous concerne un usage normal d'une seule unité multimédia avec un seul module de sécurité.

A titre d'exemple, prenons le cas où un utilisateur enclenche son unité multimédia ou arrive sur un canal déterminé au temps indiqué par t1 sur la figure 3. A cet instant, le contenu CT doit être déchiffré par le mot de contrôle CW2. A cet instant également, le premier message de contrôle ECM1 est diffusé. Ce message de contrôle ECM1 contient les mots de contrôle CW1 et CW2. Le contenu pourra donc être déchiffré grâce au mot de contrôle CW2.

Si l'utilisateur enclenche son unité multimédia ou arrive sur un canal déterminé au temps indiqué par t2, il aura également besoin du mot de contrôle CW2 pour déchiffrer le contenu. A cet instant, le deuxième message de contrôle ECM2 est diffusé. Celui-ci contient les mots de contrôle CW2 et CW3. Le contenu CT pourra donc être déchiffré grâce au mot de contrôle CW2.

Si l'utilisateur enclenche son unité multimédia ou arrive sur un canal déterminé au temps indiqué par t3, le déroulement du procédé sera similaire au déroulement expliqué pour le cas où le temps d'enclenchement est t1. Le mot de contrôle CW2 provenant du message de contrôle ECM2 pourra être utilisé pour accéder au contenu.

On voit donc que, dans une utilisation conventionnelle, quel que soit l'instant auquel un utilisateur enclenche son unité multimédia ou change de canal, il pourra accéder au contenu chiffré.

La figure 4 illustre un usage frauduleux de deux unités multimédia avec la méthode de l'invention. Selon cet usage, chaque décodeur n'utilise qu'un message de contrôle sur deux. Imaginons que l'un des décodeurs utilise le premier message de contrôle ECM1, contenant les mots de contrôle CW1 et CW2. Si l'utilisateur enclenche son unité multimédia ou arrive sur un canal concerné au temps t1, tout se passe comme dans l'exemple illustré par la figure 3, c'est-à-dire que le mot de contrôle CW2 nécessaire au déchiffrement du contenu est disponible puisqu'il était intégré dans le message de contrôle ECM1. Le contenu est donc accessible.

Si l'utilisateur enclenche son unité multimédia au temps t2, il aura besoin du mot de contrôle CW2 pour pouvoir accéder au contenu CT. Etant donné que celui-ci a été envoyé dans le premier message de contrôle ECM1, il est disponible et le contenu peut être déchiffré.

Dans le cas où l'utilisateur enclenche son unité multimédia à l'instant t3, il aura besoin du mot de contrôle CW3 pour accéder au contenu. Ce mot de contrôle est envoyé une fois dans le deuxième message de contrôle ECM2 et une fois dans le troisième message de contrôle ECM3. Dans l'hypothèse d'un usage frauduleux tel que décrit précédemment, le deuxième message de contrôle ECM2 n'a pas été utilisé par ce décodeur, mais a été transmis à un autre décodeur. Les mots de contrôle qu'il contient ne sont donc pas disponibles pour le décodeur considéré. Etant donné le décalage entre les flux de données et de messages de contrôle, le troisième message de contrôle ECM3 n'est pas disponible à l'instant t3. Il en résulte que pendant toute la période entre le moment où le troisième mot de contrôle CW3 est nécessaire et l'envoi du troisième message de contrôle ECM3, le contenu ne peut pas être déchiffré.

En pratique, pour qu'un utilisateur honnête puisse avoir accès à la totalité du contenu, il est nécessaire que le décalage entre le entre le flux de données CT et le flux de messages de contrôle ECM soit inférieur à une cryptopériode. Pour qu'un utilisateur frauduleux soit pénalisé au maximum, le décalage doit être aussi grand que possible. On choisira généralement un décalage légèrement inférieur à une cryptopériode. De préférence, on choisira un décalage tel que ce décalage plus le temps de traitement dudit message de contrôle par le module de sécurité et de renvoi du mot de contrôle au dispositif d'exploitation soit inférieur à la cryptopériode.

A titre d'exemple, il est possible de prévoir une cryptopériode de 5 secondes par exemple avec un décalage de 4 secondes entre les deux flux. Il en résulte qu'en cas d'utilisation d'un seul module de sécurité alimentant deux décodeurs, chaque décodeur subira une période non-négligeable pendant laquelle il n'aura pas accès au contenu chiffré.

## Revendications

1. Méthode de contrôle d'accès à des données (CT) chiffrées par des mots de contrôle (CW), ces mots de contrôle étant reçus par un module de sécurité dans des messages de contrôle (ECM) et retournés à une unité d'exploitation des données chiffrées, lesdits messages de contrôle (ECM) contenant au moins un premier mot de contrôle (CW1) et un second mot de contrôle (CW2), ces mots de contrôle permettant chacun l'accès aux données chiffrées (CT) pendant une durée déterminée dénommée cryptopériode (CP), cette méthode comportant les étapes :
- d'envoi desdites données chiffrées à au moins une unité d'exploitation; et
- d'envoi des messages de contrôle (ECM) à ladite unité d'exploitation, un tel message de contrôle (ECM) contenant au moins deux mots de contrôle (CW1, CW2) déterminés étant envoyé à l'unité d'exploitation après l'envoi des données chiffrées par ledit premier mot de contrôle (CW1) et avant l'envoi des données chiffrées par ledit second mot de contrôle (CW2);
cette méthode étant **caractérisée en ce que** le temps de décalage entre l'envoi à l'unité d'exploitation des données chiffrées par ledit premier mot de contrôle (CW1) et l'envoi du message de contrôle (ECM) contenant ledit premier mot de contrôle (CW1) et ledit second mot de contrôle (CW2) est supérieur à 75% de la cryptopériode.

2. Méthode de contrôle d'accès selon la revendication 1, **caractérisée en ce que** le temps de décalage entre l'envoi à l'unité d'exploitation des données chiffrées par ledit premier mot de contrôle (CW1) et l'envoi du message de contrôle (ECM) contenant ledit premier mot de contrôle (CW1) et ledit second mot de contrôle (CW2) est inférieur à 100% de la cryptopériode.

3. Méthode de contrôle d'accès selon la revendication 1 ou 2, **caractérisée en ce que** le temps de décalage entre l'envoi à l'unité d'exploitation des données chiffrées par ledit premier mot de contrôle (CW1) et l'envoi du message de contrôle (ECM) contenant ledit premier mot de contrôle (CW1) et ledit second mot de contrôle (CW2) est inférieur à 100% de la cryptopériode moins le temps de traitement dudit message de contrôle par le module de sécurité et de renvoi du mot de contrôle au dispositif d'exploitation.

4. Méthode de contrôle d'accès selon la revendication 1, **caractérisée en ce que** le flux de données est du type MPEG.

## Claims

1. Method for controlling access to data (CT) encrypted by control words (CW), these control words being received by a security module in control messages (ECM) and returned to a processing unit for encrypted data, said control messages (ECM) containing at least a first control word (CW1) and a second control word (CW2), these control words each allowing access to encrypted data (CT) during a determined time duration called a cryptoperiod (CP), this method including the steps of:
- sending said encrypted data to at least one processing unit; and
- sending the control messages (ECM) to said processing unit, this type of control message (ECM) containing at least two determined control words (CW1, CW2) being sent to the processing unit after the sending of the data encrypted by said first control word (CW1) and before the sending of the data encrypted by said second control word (CW2);
this method being **characterised in that** the time shifting between the sending to the processing unit of data encrypted by said first control word (CW1) and the sending of the control message (ECM) containing said first control word (CW1) and said second control word (CW2) is greater than 75% of the cryptoperiod.

2. Method for controlling access according to claim 1, **characterised in that** the time shifting between the sending to the processing unit of data encrypted by said first control word (CW1) and the sending of the control message (ECM) containing said first control word (CW1) and said second control word (CW2) is lower than 100% of the cryptoperiod.

3. Method for controlling access according to claim 1 or 2, **characterised in that** the time shifting between the sending to the processing unit of data encrypted by said first control word (CW1) and the sending of the control message (ECM) containing said first control word (CW1) and said second control word (CW2) is lower than 100% of the cryptoperiod minus the time for processing said control message by the security module and for returning the control word to the processing device.

4. Method for controlling access according to claim 1, **characterised in that** the data stream is of the MPEG type.

## Patentansprüche

1. Verfahren zur Kontrolle des Zugangs zu Daten (CT), die durch Kontrollwörter (CW) verschlüsselt sind, bei dem diese Kontrollwörter durch ein Sicherheitsmodul in Kontrollnachrichten (ECM) empfangen und an eine Auswertungseinheit der verschlüsselten Daten zurückgesendet werden, wobei diese Kontrollnachrichten (ECM) wenigstens ein erstes Kontrollwort (CW1) und ein zweites Kontrollwort (CW2) aufweisen, wobei diese Kontrollwörter jeweils den Zugang zu den verschlüsselten Daten (CT) während eines bestimmten Zeitraums, der Kryptoperiode (CP) genannt wird, erlauben, wobei das Verfahren die Schritte aufweist:
- Senden der verschlüsselten Daten an wenigstens eine Auswertungseinheit und
- Senden von Kontrollnachrichten (ECM) an die Auswertungseinheit, wobei eine Kontrollnachricht (ECM), die wenigstens zwei bestimmte Kontrollwörter (CW1, CW2) aufweiset, nach dem Senden der durch das erste Kontrollwort (CW1) verschlüsselten Daten und vor dem Senden der durch das zweite Kontrollwort (CW2) verschlüsselten Daten an die Auswertungseinheit gesendet wird,
wobei das Verfahren **dadurch gekennzeichnet ist, dass** der Zeitabstand zwischen dem Senden der durch das erste Kontrollwort (CW1) verschlüsselten Daten an die Auswertungseinheit und dem Senden der das erste Kontrollwort (CW1) sowie das zweite Kontrollwort (CW2) aufweisenden Kontrollnachricht (ECM) größer als 75% der Kryptoperiode ist.

2. Verfahren zur Kontrolle des Zugangs nach Anspruch 1, **dadurch gekennzeichnet, dass** der Zeitabstand zwischen dem Senden der durch das erste Kontrollwort (CW1) verschlüsselten Daten an die Auswertungseinheit und dem Senden der das erste Kontrollwort (CW1) sowie das zweite Kontrollwort (CW2) aufweisenden Kontrollnachricht (ECM) kleiner als 100% der Kryptoperiode ist.

3. Verfahren zur Kontrolle des Zugangs nach Anspruch 1 oder 2, **dadurch gekennzeichnet, dass** der Zeitabstand zwischen dem Senden der durch das erste Kontrollwort (CW1) verschlüsselten Daten an die Auswertungseinheit und dem Senden der das erste Kontrollwort (CW1) sowie das zweite Kontrollwort (CW2) aufweisenden Kontrollnachricht (ECM) kleiner als 100% der Kryptoperiode abzüglich der Zeit zur Verarbeitung der Kontrollnachricht durch das Sicherheitsmodul und zur Rücksendung des Kontrollwortes an die Auswertungseinrichtung ist.

4. Verfahren zur Kontrolle des Zugangs nach Anspruch 1, **dadurch gekennzeichnet, dass** der Datenstrom vom Typ MPEG ist.
